# EUROPÄISCHE PATENTSCHRIFT

(11) **EP 2 893 207 B1**
(45) Veröffentlichungstag und Bekanntmachung des Hinweises auf die Patenterteilung: **28.12.2016**
(21) Anmeldenummer: 13753552.2
(22) Anmeldetag: 17.07.2013
(51) Int. Cl.: F16C 33/54, F16C 19/30

(54) **AXIALKÄFIG FÜR ZYLINDRISCHE WÄLZKÖRPER**
AXIAL CAGE FOR CYLINDRICAL ROLLING ELEMENTS
CAGE AXIALE POUR CORPS DE ROULEMENT CYLINDRIQUES

(30) Priorität: 05.09.2012 DE 102012215740
(43) Veröffentlichungstag der Anmeldung: 15.07.2015
(73) Patentinhaber: Schaeffler Technologies AG & Co. KG, 91074 Herzogenaurach (DE)
(72) Erfinder: FUGEL, Wolfgang, 90453 Nürnberg (DE); KIRSCHNER, Andreas, 91086 Aurachtal (DE); GEGNER, Martin, 91474 Langenfeld (DE)
(86) Internationale Anmeldenummer: PCT/DE2013/200056
(87) Internationale Veröffentlichungsnummer: WO 2014/036997

(56) Entgegenhaltungen:
- EP-A1- 2 042 756
- EP-A2- 1 657 460
- DE-A1-102010 019 069
- GB-A- 826 173
- JP-A- 2005 273 755

## Beschreibung

### Gebiet der Erfindung

Die Erfindung betrifft einen Axialkäfig für zylindrische Wälzkörper nach den oberbegriffsbildenden Merkmalen des Patentanspruchs 1, und sie ist insbesondere vorteilhaft an Axialkäfigen für Axialnadellager realisierbar.

### Hintergrund der Erfindung

Durch die DE 1 174 113 B1 ist ein gattungsbildender Axialkäfig für ein Axialnadellager bekannt, der im Wesentlichen aus einer dünnwandigen Ringscheibe mit einem W-förmigen Profilquerschnitt besteht, dessen einzelne Profilschenkel durch einen an den Innenrand der Ringscheibe angeformten inneren radialen Bord, einen an den Außenrand der Ringscheibe angeformten äußeren radialen Bord und eine über innere und äußere axiale Profilabschnitte mit den radialen Borden verbundene sowie die gleiche radiale Erstreckung wie die Borde aufweisende mittlere U-förmige Sicke gebildet werden. Aus der mittleren Sicke und den angrenzenden axialen Profilabschnitten sind dabei eine Anzahl gleichmäßig zueinander beabstandeter, rechteckförmiger Käfigtaschen ausgenommen, zwischen denen eine gleiche Anzahl die Borde miteinander verbindende Taschenstege gebildet werden, durch welche die als Lagernadeln ausgebildeten Wälzkörper in den Käfigtaschen gehalten sowie in Umlaufrichtung geführt werden.

Aus der Praxis ist es jedoch hinlänglich bekannt, dass es bei derartigen Axialkäfigen im Lagerbetrieb durch die auf die Lagernadeln wirkenden Fliehkräfte zu einem sogenannten Nadelbohren kommt, bei dem die Lagernadeln mit ihren äußeren Stirnseiten mit den äußeren Eckradien ihrer Käfigtaschen in Reibkontakt treten. Dieser Reibkontakt bewirkt, dass die aus Gründen der Erhöhung der Scher- und Gestaltfestigkeit des Axialkäfigs an dieser Stelle vorgesehenen Eckradien sich nach und nach abarbeiten bzw. verschleißen und es letztlich zum Bruch bzw. vorzeitigen Ausfall des Axialkäfigs kommt.

Zur Vermeidung eines solchen durch Nadelbohren verursachten vorzeitigen Ausfalls des Axialkäfigs wurde es deshalb durch die DE 101 43 089 A1 vorgeschlagen, den Axialkäfig so auszubilden, dass dieser am Übergangsbereich des inneren und/oder des äußeren radialen Bordes zum angrenzenden axialen Profilabschnitt eine umlaufende Ausbauchung aufweist, die zum freien Profilende des radialen Bordes hin in eine umlaufende Einschnürung übergeht. Diese umlaufende Einschnürung ragt dabei axial in die Käfigtaschen hinein und steht mit den Stirnseiten der Lagernadeln über zwei Berührungspunkte derart in Stützkontakt, dass die Lagernadeln unter Einfluss von Fliehkräften nicht mehr an die Eckradien der Käfigtaschen anlaufen können.

Bei dieser an sich sehr vorteilhaften Lösung hat es sich jedoch gezeigt, dass diese fertigungstechnisch nur mit zusätzlichem Aufwand oder mit völlig abgeänderter Verfahrenstechnik umsetzbar ist. Die übliche Verfahrenstechnik zur Herstellung eines spanlos hergestellten Axialkäfigs besteht bekanntermaßen darin, diesen aus einem endlosen Blechband in mehreren Arbeitsschritten in einem Stufen-Stanzziehwerkzeug herzustellen, in welchem zunächst eine über zwei seitliche Haltestege mit dem Blechband verbundene Ringscheibe ausgestanzt wird, anschließend die U-förmige Sicke und der äußere radiale Bord in die Ringscheibe eingeformt wird, dann der Innendurchmesser des Axialkäfigs ausgestanzt und der innere radialen Borde an die Ringscheibe angeformt werden, anschließend die Käfigtaschen ausgestanzt werden und schließlich noch der Außendurchmesser des Axialkäfigs ausgestanzt wird. Am Ende der einzelnen Arbeitsschritte ist dann der fertige Axialkäfig lediglich noch über die seitlichen Haltestege mit dem Blechband verbunden, von denen er in einem letzen Arbeitschritt getrennt wird. Weist dieser Bord jedoch wie bei der beschriebenen Lösung eine umlaufende Einschnürung auf, die in eine umlaufende Ausbauchung übergeht, so ist dieses Trennen des fertigen Axialkäfigs von den seitlichen Haltestegen wegen der unter den Haltestegen angeordneten Ausbauchung nicht direkt am Bord möglich, da ansonsten mit einer Beschädigung der Ausbauchung zu rechnen ist. Das Trennen des Axialkäfigs von den Haltestegen muss somit am Innenrand des Blechbandes erfolgen, so dass die Haltestege zunächst am heraus getrennten Axialkäfig verbleiben und anschließend kostenaufwändig mit gesonderten Werkzeugen entfernt werden müssen. Eine andere Möglichkeit zur Herstellung des beschriebenen Axialkäfigs wäre es, diesen aus einzelnen Blechronden zu fertigen, jedoch sind zu einer solchen Herstellung aufwändige Transportvorrichtungen nötig, die die Blechronden von einem Arbeitsschritt zum nächsten weiter transportieren und schon deshalb den Kostenaufwand für das Herstellungsverfahren in nachteiliger Weise erhöhen.

Eine andere Möglichkeit, das beschriebene nachteilige Nadelbohren in einem Axialkäfig zu vermeiden, wurde darüber hinaus durch die EP 2 103 825 A1 offen-bart. Mit dieser Druckschrift wird ein Axialkäfig vorgeschlagen, der ebenfalls eine mittlere U-förmige Sicke mit sich daran anschließenden axialen Profilabschnitten aufweist, bei dem jedoch die an diese axialen Profilabschnitte anschließenden radialen Profilabschnitte nicht als innere und äußere Borde des Axialkäfigs ausgebildet sind, sondern in Höhe der Rollachsen der Lagernadeln in weitere innere und äußere axiale Profilabschnitte übergehen, an die sich die in entgegengesetzter radialer Richtung zur mittleren U-förmigen Sicke erstreckenden Borde angeformt sind. Die Käfigtaschen erstrecken sich bei diesem Axialkäfig vom äußeren axialen Profilquerschnitt über die U-förmige mittlere Sicke bis zum inneren axialen Profilquerschnitt, wobei an den äußeren und inneren axialen Profilabschnitten innerhalb der Käfigtaschen jeweils bordseitig zwei keilförmige Blechnasen angeformt sind, die bei Wirkung von Fliehkräften auf die Lagernadeln mit den Stirnseiten der Lagernadeln in Höhe ihrer Rollachsen in einen punktförmigen Stützkontakt treten.

Auch eine solche Lösung hat sich jedoch dahingehend als nachteilig erwiesen, dass die keilförmigen Blechnasen an zusätzlich anzuformenden inneren und äußeren axialen Profilabschnitten des Axialkäfigs angeordnet sind und diese zusätzlichen axialen Profilabschnitte neben einem erhöhten Fertigungsaufwand für den Axialkäfig auch einen erhöhten axialen Bauraum des Axialkäfigs erfordern, der in vielen Fällen nicht zur Verfügung steht. Außerdem verursacht die sich durch die besondere Profilierung des Axialkäfigs radial über die inneren und äußeren axialen Profilabschnitte hinaus erstreckende mittlere U-förmige Sicke in den Taschenstegen ebenfalls fertigungstechnische Probleme, da derartige Axialkäfige nach dem Trennen vom Blechband zum Transport zu deren Endbearbeitung üblicherweise in Sammelbehältern aufgefangen werden. Durch die frei von den inneren und äußeren axialen Profilabschnitten weg ragende U-förmige Sicke der noch nicht entgrateten Taschenstege entsteht dabei jedoch die Gefahr, dass sich die Axialkäfige in den Sammelbehältern mit ihren Taschenstegen ineinander verhaken. Zur Gewährleistung einer prozesssicheren Weiterbearbeitung der Axialkäfige kann dies somit nur mit zusätzlichen Stapelvorrichtungen vermieden werden, die ebenfalls zu einer Erhöhung der Herstellungskosten solcher Axialkäfige beitragen.

Einen ähnlichen Axialkäfig offenbart auch die EP 1 657 460 A2.

### Aufgabe der Erfindung

Ausgehend von den dargelegten Nachteilen der Lösungen des bekannten Standes der Technik liegt der Erfindung deshalb die Aufgabe zu Grunde, einen Axialkäfig für zylindrische Wälzkörper zu konzipieren, mit dem das bekannte Nadelbohren und die damit verbundenen Folgen vermieden werden und der gleichzeitig ohne fertigungstechnische Probleme nach der beschriebenen üblichen Verfahrenstechnik kostengünstig herstellbar ist.

### Beschreibung der Erfindung

Erfindungsgemäß wird diese Aufgabe bei einem Axialkäfig für zylindrische Wälzkörper nach dem Oberbegriff des Anspruchs 1 derart gelöst, dass der äußere radiale Bord mit einer von der mittleren U-förmigen Sicke weg weisenden Neigung ausgebildet ist und die Käfigtaschen eine derart größere axiale Länge als der kleinste axiale Abstand zwischen den Innenseiten des inneren und des äußeren radialen Bordes aufweisen, dass sich die Käfigtaschen zumindest bis in den äußeren radialen Bord des Axialkäfigs erstrecken und durch eine ballige Ausbildung ihrer äußeren Stirnseiten zur Taschenmitte hin am äußeren radialen Bord des Axialkäfigs in Höhe der Rollachsen der Wälzkörper eine abgerundete Anlaufnase für die äußeren Stirnseiten der Wälzkörper bilden.

Bevorzugte Ausgestaltungen und Weiterbildungen des erfindungsgemäß ausgebildeten Axialkäfigs werden in den Unteransprüchen 2 bis 7 beschrieben. Danach ist es gemäß Anspruch 2 bei dem erfindungsgemäß ausgebildeten Axialkäfig vorgesehen, dass die Neigung des äußeren radialen Bordes etwa 15° gegenüber einer vertikalen Käfigmittelachse beträgt. Eine solche Neigung hat sich als Optimum erwiesen, um einerseits einen ausreichenden Ausformungsgrad der in den äußeren Bord einzuarbeitenden Anlaufnasen für die Wälzkörper zu erreichen und andererseits die Stabilität bzw. Biegesteifigkeit des Axialkäfigs nicht zu beeinträchtigen.

Nach Anspruch 3 ist es ein weiteres Merkmal des erfindungsgemäß ausgebildeten Axialkäfigs, dass die größere axiale Länge der Käfigtaschen gegenüber dem kleinsten axialen Abstand zwischen den Innenseiten der Borde durch eine verkürzte Ausbildung der Länge des äußeren axialen Profilabschnittes gegenüber der Länge des inneren axialen Profilquerschnittes herstellbar ist. Dadurch ist es möglich, den erfindungsgemäßen Axialkäfig mit der gleichen axialen Breite wie herkömmliche Axialkäfige auszubilden und mit den gleichen herkömmlichen Wälzkörpern ohne Längenveränderungen zu bestücken.

Gemäß den Anspruch 4 bis 6 zeichnet sich der erfindungsgemäß ausgebildete Axialkäfig darüber hinaus noch dadurch aus, dass er nach der eingangs beschriebenen Verfahrenstechnik hergestellt ist, bei der die Käfigtaschen spanlos durch Ausstanzen eingearbeitet werden, wobei deren abgerundete Anlaufnasen durch Auslegung des Schnittspaltes mit einer Glattschnittfläche von 10% bis 30% der Materialstärke des Axialkäfigs eine gezielte Stanzausrissfläche von 70% bis 90% der Materialstärke des Axialkäfigs aufweisen. Die Glattschnittfläche der Anlaufnasen ist dabei senkrecht in die Innenseite des mit der Neigung ausgebildeten äußeren radialen Bordes des Axialkäfigs eingearbeitet und steht somit in Höhe der Taschenlängsmitte in einem minimalen Linienkontakt zu den Stirnseiten der Wälzkörper. Gleichzeitig wirkt die von der Glattschnittfläche schräg zur Außenseite des Bordes verlaufende Stanzausrissfläche der Anlaufnasen direkt unterhalb des Linienkontaktes zwischen diesen und den Stirnseiten der Wälzkörper als Kapillar, mit dem immer ausreichend Schmierstoff zu diesem Kontakt gefördert wird.

Schließlich wird es als vorteilhafte Ausgestaltung des erfindungsgemäß ausgebildeten Axialkäfigs durch Anspruch 7 noch vorgeschlagen, dass die durch die abgerundete Ausbildung der Anlaufnasen der Käfigtaschen entstehenden Freiräume beidseitig des Linienkontaktes zwischen diesen und den Stirnseiten der Wälzkörper als Abführöffnungen für überschüssigen Schmierstoff aus einem den Axialkäfig aufweisenden Axiallager vorgesehen sind. Dies hat sich besonders vorteilhaft bei Axiallagern erwiesen, die beispielsweise in einem Schaltgetriebe eines Kraftfahrzeuges eingesetzt sind und permanent von Schmieröl durchströmt werden.

Zusammenfassend weist der erfindungsgemäß ausgebildete Axialkäfig somit gegenüber den aus dem Stand der Technik bekannten Axialkäfigen den Vorteil auf, dass er ohne wesentliche Änderungen des an sich bewährten W-förmigen Profilquerschnitts lediglich durch leichte Schrägstellung seines äußeren radialen Bordes mit abgerundeten Anlaufnasen ausgebildet werden kann, die mit den äußeren Stirnseiten der Wälzkörper in Linienkontakt stehen und somit ein Nadelbohren an den äußeren Eckradien der Käfigtaschen im Axialkäfig und die damit verbundenen Folgen wirksam vermeiden. Soll ein solches Nadelbohren auch an den inneren Eckradien der Käfigtaschen vermieden werden, ist es möglich, auch den inneren radialen Bord schräg anzustellen und mit abgerundeten Anlaufnasen auszubilden. Gleichzeitig ist es möglich, den Axialkäfig nach der kostengünstigen Verfahrenstechnik aus einem Blechband herzustellen, da der dem Außendurchmesser des Axialkäfigs entsprechende äußere Bord zum Anformen der seitlichen Haltestege zum Blechband sowie zum Trennen des fertigen Axialkäfigs von diesen Haltestegen direkt am äußeren Bord geeignet ist.

### Kurze Beschreibung der Zeichnungen

Eine bevorzugte Ausführungsform des erfindungsgemäß ausgebildeten Axialkäfigs wird nachfolgend unter Bezugnahme auf die beigefügten Zeichnungen näher erläutert. Dabei zeigen:
- Figur 1: eine räumliche Gesamtansicht eines erfindungsgemäß ausgebildeten Axialkäfigs eines Axialnadellagers;
- Figur 2: eine vergrößerte Darstellung der Einzelheit X des erfindungsgemäß ausgebildeten Axialkäfigs gemäß Figur 1;
- Figur 3: den Schnitt A - A gemäß Figur 2 durch den erfindungsgemäß ausgebildeten Axialkäfig;

### Ausführliche Beschreibung der Zeichnungen

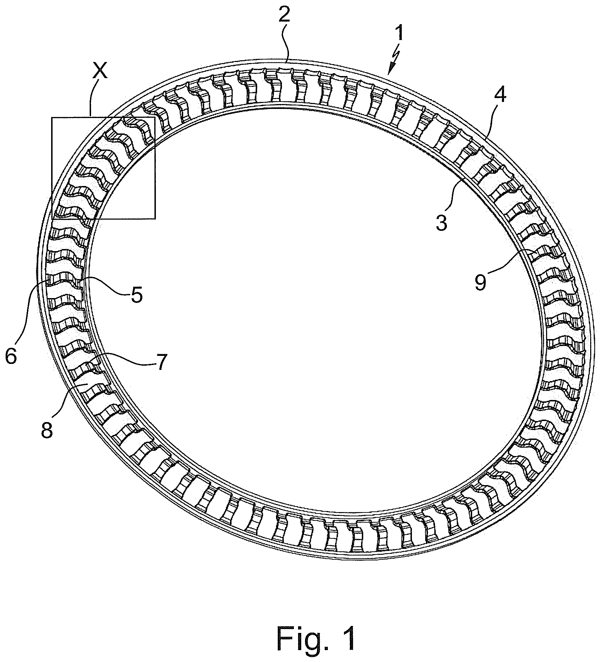

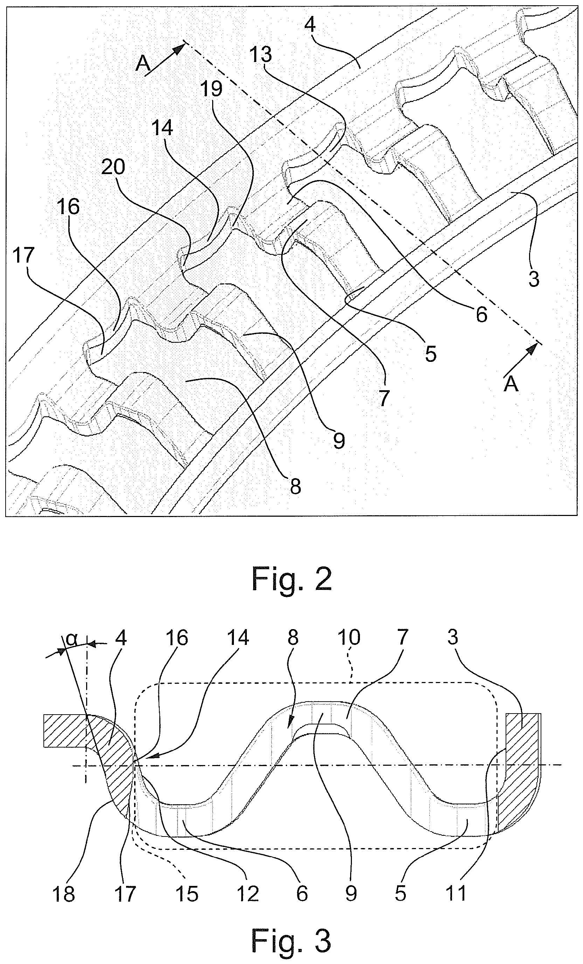

Aus Figur 1 geht ein für ein Axialnadellager geeigneter Axialkäfig 1 hervor, welcher im Wesentlichen aus einer dünnwandigen Ringscheibe 2 besteht, die, wie insbesondere Figur 3 deutlich zeigt, einen W-förmigen Profilquerschnitt aufweist. Desweiteren ist in Figur 1 in Zusammenschau mit Figur 3 zu sehen, dass die einzelnen Profilschenkel des Axialkäfigs 1 durch einen an den Innenrand der Ringscheibe 2 angeformten inneren radialen Bord 3, einen an den Außenrand der Ringscheibe 2 angeformten äußeren radialen Bord 4 und eine über innere und äußere axiale Profilabschnitte 5, 6 mit den Borden 3, 4 verbundene U-förmige Sicke 7 gebildet werden, welche die gleiche radiale Erstreckung wie die Borde 3, 4 aufweist. Aus den Figuren 1 und 2 wird darüber hinaus noch deutlich, dass aus der Sicke 7 und den angrenzenden axialen Profilabschnitten 5, 6 eine Anzahl gleichmäßig zueinander beabstandeter, rechteckförmiger Käfigtaschen 8 ausgenommen sind, zwischen denen eine gleiche Anzahl die Borde 3, 4 miteinander verbindende Taschenstege 9 gebildet werden, welche die in Figur 3 angedeuteten und als Lagernadeln ausgebildeten zylindrischen Wälzkörper 10 in den Käfigtaschen 8 halten sowie in Umlaufrichtung führen.

Die Figuren 2 und 3 zeigen desweiteren, dass der äußere radiale Bord 4 erfindungsgemäß mit einer von der mittleren U-förmigen Sicke 7 weg weisenden Neigung α ausgebildet ist und die Käfigtaschen 8 eine derart größere axiale Länge als der kleinste axiale Abstand zwischen den Innenseiten 11, 12 des inneren und des äußeren radialen Bordes 3, 4 aufweisen, dass sich die Käfigtaschen 8 bis in den äußeren radialen Bord 4 des Axialkäfigs 1 erstrecken und durch eine ballige Ausbildung ihrer äußeren Stirnseiten 13 zur Taschenmitte hin am äußeren radialen Bord 4 des Axialkäfigs 1 in Höhe der nicht näher bezeichneten Rollachsen der Wälzkörper 10 eine abgerundete Anlaufnase 14 für die äußeren Stirnseiten 15 der Wälzkörper 10 bilden.

Durch den in Figur 3 gezeigten Schnitt A - A der Figur 2 wird dabei deutlich, dass die Neigung α des äußeren radialen Bordes 4 etwa 15° gegenüber einer nur andeutungsweise dargestellten vertikalen Käfigmittelachse beträgt und dass die größere axiale Länge der Käfigtaschen 8 gegenüber dem kleinsten axialen Abstand zwischen den Innenseiten 11, 12 der Borde 3, 4 durch eine verkürzte Ausbildung der Länge des äußeren axialen Profilabschnittes 6 gegenüber der Länge des inneren axialen Profilquerschnittes 5 hergestellt ist. Schließlich ist aus den Darstellungen der Figuren 2 und 3 noch ersichtlich, dass der Axialkäfig 1 aus einem endlosen Blechband in einem Stufen- Stanzziehwerkzeug hergestellt ist und die abgerundeten Anlaufnasen 14 der ausgestanzten Käfigtaschen 8 durch Auslegung des Schnittspaltes mit einer Glattschnittfläche 16 von ca. 10% eine gezielte Stanzausrissfläche 17 von ca. 90% der Materialstärke des Axialkäfigs 1 aufweisen. Die Glattschnittfläche 16 der Anlaufnasen 14 ist dabei senkrecht in die Innenseite 12 des mit der Neigung α ausgebildeten äußeren radialen Bordes 4 des Axialkäfigs 1 eingearbeitet und steht in Höhe der Taschenlängsmitte mit den Stirnseiten 15 der Wälzkörper 10 im Linienkontakt, während die von der Glattschnittfläche 16 schräg zur Außenseite 18 des Bordes 4 verlaufende Stanzausrissfläche 17 der Anlaufnasen 14 unterhalb des Linienkontaktes zwischen diesen und den Stirnseiten 15 der Wälzkörper 10 als Kapillar zur Förderung von Schmierstoff zu diesem Kontakt vorgesehen ist. Gleichzeitig sind die durch die abgerundete Ausbildung der Anlaufnasen 14 entstehenden Freiräume 19, 20 beidseitig des Linienkontaktes zwischen diesen und den Wälzkörpern 10 als Abführöffnungen vorgesehen, durch die überschüssiger Schmierstoff aus dem Axiallager abgeführt wird.

### Bezugszahlenliste

- 1: Axialkäfig
- 2: Ringscheibe
- 3: innerer radialer Bord
- 4: äußerer radialer Bord
- 5: innerer axialer Profilabschnitt
- 6: äußerer axialer Profilabschnitt
- 7: mittlere Sicke
- 8: Käfigtaschen
- 9: Taschenstege
- 10: Wälzkörper
- 11: Innenseite von 3
- 12: Innenseite von 4
- 13: äußere Stirnseiten von 8
- 14: Anlaufnase an 13
- 15: äußere Stirnseiten von 10
- 16: Glattschnittfläche an 14
- 17: Stanzausrissfläche an 14
- 18: Außenseite von 4
- 19: Freiraum neben 14
- 20: Freiraum neben 14
- α: Neigungswinkel von 4

## Patentansprüche

1. Axialkäfig (1) für zylindrische Wälzkörper, im Wesentlichen bestehend aus einer dünnwandigen Ringscheibe (2) mit einem W-förmigen Profilquerschnitt, dessen einzelne Profilschenkel durch einen an den Innenrand der Ringscheibe (2) angeformten inneren radialen Bord (3), einen an den Außenrand der Ringscheibe (2) angeformten äußeren radialen Bord (4) und eine über innere und äußere axiale Profilabschnitte (5, 6) mit den radialen Borden (3, 4) verbundene sowie die gleiche radiale Erstreckung wie die Borde (3, 4) aufweisende mittlere U-förmige Sicke (7) gebildet werden, wobei aus der mittleren Sicke (7) und den angrenzenden axialen Profilabschnitten (5, 6) eine Anzahl gleichmäßig zueinander beabstandeter, rechteckförmiger Käfigtaschen (8) ausgenommen sind, zwischen denen eine gleiche Anzahl die Borde (3, 4) miteinander verbindender Taschenstege (9) gebildet werden, durch welche die zylindrischen Wälzkörper (10) in den Käfigtaschen (8) in gleichmäßigen Abständen zueinander gehalten sowie in Umlaufrichtung geführt werden, **dadurch gekennzeichnet, dass** der äußere radiale Bord (4) mit einer von der mittleren U-förmigen Sicke (7) weg weisenden Neigung (α) ausgebildet ist und die Käfigtaschen (8) eine derart größere axiale Länge als der kleinste axiale Abstand zwischen den Innenseiten (11, 12) des inneren und des äußeren radialen Bordes (3, 4) aufweisen, dass sich die Käfigtaschen (8) zumindest bis in den äußeren radialen Bord (4) des Axialkäfigs (1) erstrecken und durch eine ballige Ausbildung ihrer äußeren Stirnseiten (13) zur Taschenmitte hin am äußeren radialen Bord (4) des Axialkäfigs (1) in Höhe der Rollachsen der Wälzkörper (10) eine abgerundete Anlaufnase (14) für die äußeren Stirnseiten (15) der Wälzkörper (10) bilden.

2. Axialkäfig nach Anspruch 1, **dadurch gekennzeichnet, dass** die Neigung (α) des äußeren radialen Bordes (4) etwa 15° gegenüber einer vertikalen Käfigmittelachse beträgt.

3. Axialkäfig nach Anspruch 1, **dadurch gekennzeichnet, dass** die größere axiale Länge der Käfigtaschen (8) gegenüber dem kleinsten axialen Abstand zwischen den Innenseiten (11, 12) der Borde (3, 4) durch eine verkürzte Ausbildung der Länge des äußeren axialen Profilabschnittes (6) gegenüber der Länge des inneren axialen Profilquerschnittes (5) herstellbar ist.

4. Axialkäfig nach Anspruch 1, **dadurch gekennzeichnet, dass** die Käfigtaschen (8) spanlos durch Ausstanzen hergestellt sind, wobei deren abgerundete Anlaufnasen (14) durch Auslegung des Schnittspaltes mit einer Glattschnittfläche (16) von ca. 10% eine gezielte Stanzausrissfläche (17) von ca. 90% der Materialstärke des Axialkäfigs (1) aufweisen.

5. Axialkäfig nach Anspruch 4, **dadurch gekennzeichnet, dass** die Glattschnittfläche (16) der Anlaufnasen (14) senkrecht in die Innenseite (11) des mit der Neigung ausgebildeten äußeren radialen Bordes (4) des Axialkäfigs (1) eingearbeitet ist und in Höhe der Taschenlängsmitte im Linienkontakt zu den Stirnseiten (15) der Wälzkörper (10) steht.

6. Axialkäfig nach Anspruch 5, **dadurch gekennzeichnet, dass** die von der Glattschnittfläche (16) schräg zur Außenseite (18) des Bordes (4) verlaufende Stanzausrissfläche (17) der Anlaufnasen (14) unterhalb des Linienkontaktes zwischen diesen und den Stirnseiten (15) der Wälzkörper (10) als Kapillar zur Förderung von Schmierstoff zu diesem Kontakt vorgesehen ist.

7. Axialkäfig nach Anspruch 5, **dadurch gekennzeichnet, dass** die durch die abgerundete Ausbildung der Anlaufnasen (14) der Käfigtaschen (8) entstehenden Freiräume (19, 20) beidseitig des Linienkontaktes zwischen diesen und den Stirnseiten (15) der Wälzkörper (10) als Abführöffnungen für überschüssigen Schmierstoff vorgesehen sind.

## Claims

1. Axial cage (1) for cylindrical rolling bodies, substantially consisting of a thin-walled annular disc (2) with a W-shaped profile cross section, the individual profile limbs of which are formed by an inner radial rim (3) which is shaped onto the inner edge of the annular disc (2), an outer radial rim (4) which is shaped onto the outer edge of the annular disc (2), and a middle U-shaped bead (7) which is connected to the radial rims (3, 4) via inner and outer axial profile sections (5, 6) and has the same radial extent as the rims (3, 4), a number of rectangular cage pockets (8) which are spaced apart from one another uniformly being cut out from the middle bead (7) and the adjoining axial profile sections (5, 6), between which cage pockets (8) an identical number of pocket webs (9) are formed which connect the rims (3, 4) to one another and by way of which the cylindrical rolling bodies (10) in the cage pockets (8) are held at uniform spacings from one another and are guided in the circulating direction, **characterized in that** the outer radial rim (4) is configured with an inclination (α) which points away from the middle U-shaped bead (7), and the cage pockets (8) have a greater axial length than the smallest axial spacing between the inner sides (11, 12) of the inner and the outer radial rim (3, 4), such that the cage pockets (8) extend at least as far as into the outer radial rim (4) of the axial cage (1) and form a rounded run-on lug (14) for the outer end side (15) of the rolling bodies (10) on the outer radial rim (4) of the axial cage (1) at the level of the rolling axes of the rolling bodies (10) by way of a crowned configuration of the outer end sides (13) of the cage pockets towards the pocket middle.

2. Axial cage according to Claim 1, **characterized in that** the inclination (α) of the outer radial rim (4) is approximately 15° with respect to a vertical cage centre axis.

3. Axial cage according to Claim 1, **characterized in that** the greater axial length of the cage pockets (8) in comparison with the smallest axial spacing between the inner sides (11, 12) of the rims (3, 4) can be produced by way of a shortened configuration of the length of the outer axial profile section (6) in comparison with the length of the inner axial profile cross section (5).

4. Axial cage according to Claim 1, **characterized in that** the cage pockets (8) are produced without cutting by way of punching out, their rounded run-on lugs (14) having a targeted punch outline area (17) of approximately 90% of the material thickness of the axial cage (1) by way of the design of the cutting gap with a straight cut area (16) of approximately 10%.

5. Axial cage according to Claim 4, **characterized in that** the straight cut area (16) of the run-on lugs (14) is made perpendicularly in the inner side (11) of the outer radial rim (4) of the axial cage (1), which rim (4) is configured with the inclination, and lies in linear contact with the end sides (15) of the rolling bodies (10) at the level of the pocket longitudinal centre.

6. Axial cage according to Claim 5, **characterized in that** the punch outline area (17) of the run-on lugs (14) which runs from the straight cut area (16) obliquely to the outer side (18) of the rim (4) below the linear contact between the said run-on lugs (14) and the end sides (15) of the rolling bodies (10) is provided as a capillary for delivering lubricant to the said contact.

7. Axial cage according to Claim 5, **characterized in that** the clearances (19, 20) which are produced by way of the rounded configuration of the run-on lugs (14) of the cage pockets (8) are provided as discharge openings for excess lubricant on both sides of the linear contact between the said run-on lugs (14) and the end sides (15) of the rolling bodies (10).

## Revendications

1. Cage axiale (1) pour corps de roulement cylindriques, constituée essentiellement d'un disque annulaire à paroi mince (2) avec une section transversale de profilé en forme de W dont les branches de profilé individuelles sont formées par un bord radial interne (3) façonné au niveau du bord interne du disque annulaire (2), un bord radial externe (4) façonné au niveau du bord externe du disque annulaire (2) et une moulure en forme de U centrale (7) connectée par le biais de portions de profilé axiales interne et externe (5, 6) aux bords radiaux (3, 4) et présentant la même étendue radiale que les bords (3, 4), une pluralité de cavités de cage rectangulaires (8) espacées uniformément les unes des autres étant réalisées dans la moulure centrale (7) et dans les portions de profilé axiales adjacentes (5, 6), entre lesquelles est formé une pluralité identique de nervures de cavités (9) reliant les bords (3, 4) l'un à l'autre, par lesquelles nervures de cavités les corps de roulement cylindriques (10) sont retenus les uns par rapport aux autres à intervalles réguliers dans les cavités de cage (8) et sont guidés dans la direction périphérique, **caractérisée en ce que** le bord radial extérieur (4) est réalisé avec une inclinaison (α) orientée à l'écart de la moulure en forme de U centrale (7) et les cavités de cage (8) présentent une longueur axiale plus longue que la plus petite distance axiale entre les côtés internes (11, 12) des bords radiaux interne et externe (3, 4), de telle sorte que les cavités de cage (8) s'étendent au moins jusque dans le bord radial externe (4) de la cage axiale (1) et forment, par une réalisation bombée de leurs côtés frontaux externes (13) vers le centre de la cavité au niveau du bord radial externe (4) de la cage axiale (1) à la hauteur des axes de roulement des corps de roulement (10), un nez de butée arrondi (14) pour les côtés frontaux externes (15) des corps de roulement (10).

2. Cage axiale selon la revendication 1, **caractérisée en ce que** l'inclinaison (α) du bord radial externe (4) est d'environ 15° par rapport à un axe médian vertical de la cage.

3. Cage axiale selon la revendication 1, **caractérisée en ce que** la plus grande longueur axiale des cavités de cage (8) par rapport à la plus petite distance axiale entre les côtés internes (11, 12) des bords (3, 4) peut être produite par une réalisation raccourcie de la longueur de la section transversale de profilé axiale externe (6) par rapport à la longueur de la section transversale de profilé axiale interne (5).

4. Cage axiale selon la revendication 1, **caractérisée en ce que** les cavités de cage (8) sont produites sans enlèvement de copeaux par estampage, leurs nez de butée arrondis (14) présentant une surface d'arrachement d'estampage (17) d'environ 90 % de l'épaisseur de matériau de la cage axiale (1) par conception de la fente de coupe avec une surface de coupe lisse (16) d'environ 10 %.

5. Cage axiale selon la revendication 4, **caractérisée en ce que** la surface de coupe lisse (16) des nez de butée (14) est réalisée perpendiculairement dans le côté interne (11) du bord radial externe (4) de la cage axiale (1) réalisé avec l'inclinaison et se situe dans la hauteur du milieu longitudinal des cavités en contact linéaire avec les côtés frontaux (15) des corps de roulement (10).

6. Cage axiale selon la revendication 5, **caractérisée en ce que** la surface d'arrachement d'estampage (17) des nez de butée (14) s'étendant obliquement par rapport au côté externe (18) du bord (4) depuis la surface de coupe lisse (16) est prévue sous le contact linéaire entre les nez de butée et les côtés frontaux (15) des corps de roulement (10) sous forme de capillaires pour transporter du lubrifiant vers ce contact.

7. Cage axiale selon la revendication 5, **caractérisée en ce que** les espaces libres (19, 20) produits par la réalisation arrondie des nez de butée (14) des cavités de cage (8) sont prévus de chaque côté du contact linéaire entre ceux-ci et les côtés frontaux (15) des corps de roulement (10) sous forme d'ouvertures d'évacuation pour le lubrifiant en excès.
